(19) Europäisches Patentamt
European Patent Office
Office européen des brevets

(11) EP 1 508 550 B1

(12) **EUROPÄISCHE PATENTSCHRIFT**

(45) Veröffentlichungstag und Bekanntmachung des Hinweises auf die Patenterteilung:
**08.04.2009 Patentblatt 2009/15**

(51) Int Cl.:
*C01G 33/00* (2006.01)   *C04B 35/495* (2006.01)
*H01G 9/042* (2006.01)   *H01G 9/052* (2006.01)

(21) Anmeldenummer: **04016842.9**

(22) Anmeldetag: **16.07.2004**

(54) **Verfahren zur Herstellung von Niobsuboxid**

Process for producing niobium suboxide

Procédé de fabrication d'un suboxyde de niobium

(84) Benannte Vertragsstaaten:
**CZ DE GB PT**

(30) Priorität: **22.07.2003 DE 10333156**

(43) Veröffentlichungstag der Anmeldung:
**23.02.2005 Patentblatt 2005/08**

(73) Patentinhaber: **H.C. Starck GmbH**
**38642 Goslar (DE)**

(72) Erfinder: **Schnitter, Christoph, Dr.**
**31188 Holle-Sottrum (DE)**

(74) Vertreter: **Clauswitz, Kai-Uwe Wolfram et al**
**H.C. Starck GmbH**
**Im Schleeke 78-91**
**38642 Goslar (DE)**

(56) Entgegenhaltungen:
**EP-A- 1 505 611        WO-A-00/15555**
**US-A1- 2003 104 923**

## Beschreibung

Die vorliegende Erfindung betrifft ein Verfahren zur Herstellung von Niobsuboxid der ungefähren Zusammensetzung NbO, wobei das Niobsuboxid insbesondere für die Herstellung von Anoden für Festelektrolytkondensatoren geeignet ist.

Als Festelektrolytkondensatoren mit sehr großer aktiver Kondensatorfläche und daher kleiner, für die mobile Kommunikationselektronik geeigneter Bauweise werden überwiegende solche mit einer auf einem entsprechenden leitfähigen Träger aufgebrachten Niob- bzw. Tantalpentoxidsperrschicht eingesetzt unter Nutzung von deren Stabilität ("Ventilmetall"), der vergleichsweise hohen Dielektrizitätskonstanten und der über die elektrochemische Erzeugung mit sehr gleichmäßiger Schichtdicke herstellbaren isolierenden Pentoxidschicht. Als Träger werden metallische oder leitfähige niedere oxidische (Suboxide) Vorläufer der entsprechenden Pentoxide eingesetzt. Der Träger, der zugleich die eine Kondensatorelektrode (Anode) darstellt, besteht aus einer hochporösen, schwammartigen Struktur, die durch Versintern feinstteiliger Primärstrukturen bzw. bereits schwammartiger Sekundärstrukturen hergestellt wird. Die Oberfläche der Trägerstruktur wird elektrolytisch zum Pentoxid oxidiert ("formiert"), wobei die Dicke der Pentoxidschicht durch die Maximalspannung der elektrolytischen Oxidation ("Formierspannung") bestimmt wird. Die Gegenelektrode wird durch Tränken der schwammartigen Struktur mit Mangannitrat, das thermisch zu Mangandioxid umgesetzt wird oder mit einem flüssigen Vorläufer eines Polymerelektrolyten und Polymerisation erzeugt. Die elektrischen Kontakte zu den Elektroden werden auf der einen Seite durch einen bei der Erzeugung der Trägerstruktur eingesinterten Tantal- oder Niobdraht und die gegen den Draht'isolierte metallische Kondensatorhülle dargestellt.

Die Kapazität C eines Kondensators berechnet sich nach folgender Formel:

$$C = (F \cdot \varepsilon)/(d \cdot V_F)$$

wobei F die Kondensatoroberfläche, $\varepsilon$ die Dielektrizitätskonstante, d die Dicke der Isolatorschicht pro V Formierspannung und $V_F$ die Formierspannung bezeichnet. Da die Dielektrizitätskonstante $\varepsilon$ für Tantalpentoxid bzw. Niobpentoxid 27,6 bzw. 41 beträgt, das Dickenwachstum der Schicht pro Volt Formierspannung d aber 16,6 bzw. 25 Å/V beträgt, weisen beide Pentoxide einen nahezu identischen Quotienten $\varepsilon/d = 1,64$ bzw. 1,69 auf. Kondensatoren auf Basis beider Pentoxide mit gleicher Geometrie der Anodenstrukturen weisen also dieselbe Kapazität auf. Unterschiede bei Angaben von auf das Gewicht bezogenen spezifischen Kapazitäten ergeben sich trivialerweise aus den unterschiedlichen Dichten von Nb, $NbO_x$ (0,7<x<1,3; insbesondere 0,95<x<1,1) und Ta. Anodenstrukturen aus Nb und $NbO_x$ weisen daher den Vorteil der Gewichtsersparnis bei Anwendung beispielsweise in Mobiltelefonen, bei denen um jedes Gramm Gewichtsersparnis gerungen wird, auf. Unter Kostengesichtspunkten ist $NbO_x$ günstiger als Nb, da ein Teil des Volumens der Anodenstruktur durch Sauerstoff bereitgestellt wird.

Die Herstellung der Niobsuboxidpulver erfolgt nach dem üblichen metallurgischen Reaktions- und Legierungsverfahren, nach dem ein mittlerer Oxidgehalt dadurch hergestellt wird, dass Niobpentoxid und Niobmetall in Gegenwart von Wasserstoff einer Temperatur ausgesetzt werden, in der ein Sauerstoffkonzentrationsausgleich stattfindet, siehe z.B. WO 00/15555 A1:

$$2Nb_2O_5 + 3Nb \rightarrow 5NbO \qquad (1)$$

Das Verfahren besteht also darin, ein mit hoher Reinheit kommerziell verfügbares Niobpentoxid einzusetzen und dieses mit hochreinem Niobmetall, beides in Pulverform entsprechend der Stöchiometrie zu vermischen und einer Temperatur von 800 bis. 1600°C in einer wasserstoffhaltigen. Atmosphäre, die vorzugsweise bis zu 10 % Wasserstoff enthalten soll, über mehrere Stunden zu behandeln. Vorzugsweise weisen sowohl das Pentoxid als auch das Metall Primärteilchengrößen auf, die nach dem Sauerstoffausgleich der gewünschten Primärteilchengröße von unterhalb oder leicht oberhalb 1 $\mu$m (geringster) Querschnittabmessung entspricht.

Dabei werden Tiegel aus Niob oder Tantal, die mit einer Mischung aus Niobpentoxid- und Niobmetallpulver gefüllt sind, in einem Ofen unter einer wasserstoffhaltigen Atmosphäre auf die Reaktionstemperatur erhitzt.

Das für den Sauerstoffaustausch mit Niobpentoxid erforderliche Niobmetall wird vorzugsweise durch Reduktion von hochreinem Niobpentoxid zum Metall hergestellt.

Dies kann aluminothermisch durch Zünden eines $Nb_2O_5$/Al-Gemisches und Auswaschen des gebildeten Aluminiumoxides und anschließendes Aufreinigen der Niobmetallbarren mittels Elektronenstrahlen erfolgen. Der nach Reduktion und Elektronenstrahlschmelzen erhaltene Niobmetallbarren kann in an sich bekannter Weise mit Wasserstoff versprödet und gemahlen werden, wobei plättchenförmige Pulver erhalten werden.

Nach einem bevorzugten Verfahren zur Herstellung des Niobmetalls gemäß WO 00/67936 A1 wird das hochreine Niobpentoxidpulver zunächst mittels Wasserstoff bei 1000 bis 1600°C zum Niobdioxid etwa der Formel $NbO_2$,

reduziert und anschließend mit Magnesiumdampf bei 750 bis 1100°C zum Metall reduziert. Dabei entstehendes Magnesiumoxid wird mittels Säuren ausgewaschen. Das letztere Verfahren ist insbesondere aufgrund seines erheblich geringeren Energiebedarf, aufgrund der prinzipiellen Erhaltung der Primärteilchengröße des Niobpentoxides und des geringeren Kontaminationsrisikos mit für die Kondensatoreigenschaften schädlichen Substanzen bevorzugt.

Nachteilig bei der Reaktion nach Reaktionsgleichung (1) ist, dass der Volumenschwund des Niobpentoxides beim Übergang zum Niobsuboxid ca. 50 % beträgt, was ein sehr lockeres Kristallgefüge des Suboxides bedingt, das nur unter dem Risiko des Einbaus von Kristallbaufehlern durch Tempern verdichtet werden kann und daher letztendlich die Kondensatoreigenschaften nachteilig beeinflussen kann. Die schlechte Kristallqualität des Suboxides bedingt offenbar auch deren unzureichendes Fließvermögen.

Ein gutes Fließvermögen der Kondensatorpulver ist ein wesentlicher Verfahrensparameter bei der Herstellung der Kondensatoren, da die Pulver mittels automatischer Hochgeschwindigkeitspressen, die über Vorlagebehälter mit dem zu verpressenden Pulver versorgt werden, gepresst werden. Dabei ist eine gute Fließfähigkeit Voraussetzung dafür, dass eine definierte Pulvermenge mit der modernen Anforderungen gerecht werdenden Genauigkeit von beispielsweise +/-0,5 mg in die Pressmatrize fließt.

Aufgabe der Erfindung ist es, die Nachteile des Standes der Technik zu überwinden.

Aufgabe der Erfindung ist es auch, ein Niobsuboxidpulver mit einer verbesserten Fließfähigkeit zur Verfügung zu stellen.

Aufgabe der Erfindung ist es weiterhin, den Verbrauch von hochreinem Magnesium und den Anfall von Magnesiumoxid sowie gleichzeitig den Aufwand der Auswaschung des Magnesiumoxids zu reduzieren.

Ferner ist es Aufgabe der Erfindung, die Kapazität der Öfen wesentlich zu erhöhen.

Weiterhin ist es Aufgabe der Erfindung, das Kontaminationsrisiko bei der Herstellung des für die Herstellung von Niobsuboxid erforderlichen Niobmetalls weiter zu reduzieren.

Erfindungsgemäß wird demgemäß vorgeschlagen, als Ausgangsoxid für den metallurgischen Sauerstoffausgleich mit dem Niobmetallpulver ein Niobdioxid der ungefähren Zusammensetzung $NbO_2$ einzusetzen. Das Niobdioxid wird vorzugsweise durch Reduktion von Niobpentoxid im Wasserstoffstrom bei einer Temperatur von 1000 bis 1600°C hergestellt.

Gegenstand der vorliegenden Erfindung ist also ein Verfahren zur Herstellung von $NbO_x$ mit 0,7<x<1,3, bevorzugt 0,9<x<1,15, besonders bevorzugt 1 <x< 1,05, durch Umsetzung von $NbO_y$ mit 1,8<y<2,1, bevorzugt 1,9<y<2, mit einer stöchiometrischen Menge an Niobmetall in Gegenwart von Wasserstoff. Temperatur und Dauer der Reaktion sind so zu bestimmen, dass die Reaktion weitgehend vollständig abläuft.

Gegenstand der Erfindung sind ferner Niobsuboxidpulver der Formel von $NbO_x$ mit 0,7<x<1,3, bevorzugt 0,9<x<1,15, besonders bevorzugt 1<x<1,05, die eine Fließfähigkeit nach ASTM B 213 von höchstens 60 s/25g, vorzugsweise höchstens 50s/25g, insbesondere bevorzugt von höchstens 40 s/25g, aufweisen.

Bevorzugt für das erfindungsgemäße Verfahren ist eine Reaktionstemperatur von 900 bis 1600°C. Die Reaktionsdauer kann in Abhängigkeit von der Reaktionstemperatur und der Zusammensetzung und Teilchenstruktur der Ausgangssubstanzen und der Zusammensetzung des Endprodukt zwischen 0,5 bis 4 Stunden gewählt werden.

Bevorzugt wird das für das erfindungsgemäße Verfahren einzusetzende Ausgangs-Niobdioxid durch Reduktion von Niobpentoxid im Wasserstoffstrom hergestellt. Vorzugsweise erfolgt die Reaktion bei einem Wasserstoffpartialdruck von 50 bis 1100 mbar. Die Beendigung der Reaktion kann dadurch festgestellt werden, dass der Wasserstoffstrom frei von Wasserdampf ist. Vorzugsweise wird das Reaktionsprodukt nach Beendigung der Reaktion noch einige Zeit, beispielsweise 0,1 bis 0,5 Stunden, bei einer Temperatur von 900 bis 1600°C, vorzugsweise von 1200 bis 1600°C zur Stabilisierung und Verdichtung des $NbO_y$-Kristallgitter gehalten.

Weiter bevorzugt ist, dass die Temperatur während der Reduktion des Pentoxides zum Dioxid allmählich von einer Anfangstemperatur im Bereich von 950 bis 1100°C auf eine Maximaltemperatur im Bereich von 1300 bis 1600°C, besonders bevorzugt von einer Anfangstemperatur im Bereich von 1000 bis 1050°C auf eine Maximaltemperatur im Bereich von 1350 bis 1600°C, gesteigert wird und anschließend, gegebenenfalls nach einer gewissen Verweilzeit bei der Maximaltemperatur, die Reduktion bei allmählich absinkender Temperatur fortgesetzt wird. Aufgrund der in der ersten Reduktionsphase abnehmenden Sauerstoffkonzentration kann die Reduktionsgeschwindigkeit durch die ansteigende Temperatur im wesentlichen aufrecht erhalten werden bzw. durch eine niedrigere Anfangstemperatur eine zu schnelle Gitteraufweitung durch zu schnelle Reduktionsgeschwindigkeit vermieden werden. Die hohe Endtemperatur im Bereich von 1300 bis 1600°C wird dann noch eine zeitlang gehalten, sodass das Kristallgitter sich verdichten kann und Gitterfehler weitgehend ausgeheilt werden.

Andererseits ist es möglich, bereits bei Herstellung des Dioxides durch sehr schnelles Aufheizen auf eine Reduktionstemperatur von 1450 bis 1600°C eine anfänglich sehr schnelle Reduktion und damit sehr starke Aufweitung des Kristallgitters herbeizuführen, so dass das Gitter stark instabil wird, wobei ein verhältnismäßig starkes Primärteilteilchenwachstum bewirkt wird. Dies kann bei Einsatz eines sehr feinteiligen Niobpentoxides als Ausgangsmaterial erwünscht sein, wenn die Herstellung von Kondensatoren mittlerer Kapazität im Bereich von 30.000 bis 70.000 µFV/g beabsichtigt ist. Auch hier ist ein Halten bei einer Temperatur von 1200 bis 1600°C zur Konsolidierung des Dioxid-Kristallgitters vorteilhaft.

Die erforderlichen Reduktionszeiten sind von der Teilchengröße des eingesetzten Niobpentoxides und der gewählten Reduktionstemperatur abhängig. Bei einer Pentoxid-Primärteilchengröße von 0,3 bis 0,5 $\mu$m ist eine Reduktionsdauer von 20 bis 40 Minuten im allgemeinen ausreichend.

Durch die relativ hohen Reduktionstemperaturen (auch der Maximalttemperatur im ersten Fall) werden Sinterbrücken mit vorteilhaft extrem hoher Festigkeit bereits des Niobdioxids ausgebildet.

Die weitere Reduktion des Dioxides zum Metall mittels Magnesiumdampf kann bei vergleichsweise niedriger Temperatur, beispielsweise 900 bis 1100°C durchgeführt werden. Bei diesen niedrigen Temperaturen findet eine nur minimale Primärkornvergröberung statt Dadurch ist es möglich, Niobdioxid aus derselben. Quelle zu einem Teil einerseits weiter zum Metall zu reduzieren und zu einem anderen Teil ohne weitere Behandlung mit dem Metall zu vermischen und den Sauerstoffausgleich zum Suboxid herbeizuführen, da Primärkom- und Agglomeratgröße von Dioxid und Metall nicht zu unterschiedlich sind, insbesondere nach dem Sauerstoffausgleich etwa übereinstimmen.

Die Herstellung des Niobsuboxides erfolgt erfindungsgemäß also nach der Formel:

$$NbO_2 + Nb \rightarrow 2NbO \qquad (2)$$

Die Volumenschrumpfung beim Übergang des $NbO_2$ zum NbO beträgt lediglich 13%. Zwar wird der Hauptteil des Volumenschwundes des Pentoxides von 42% auf die Herstellung des $NbO_2$ verlagert, jedoch ist dies nicht schädlich, da eine Zwischenstabilisierung des Kristallgefüges als $NbO_2$ bei der Wasserstoffreduktion bewirkt werden kann.

Ferner ist vorteilhaft, dass der Magnesiumverbrauch, der Waschungsaufwand und der Anfall von Magnesiumoxid, das aufgearbeitet werden muss, für die Herstellung des Niobmetalls durch das erfindungsgemäße Verfahren jeweils um 20% reduziert wird (bezogen auf die Endausbeute an NbO).

Ein weiterer Vorteil der Erfindung ist die Erhöhung der Kapazität der Öfen für die Umsetzung zum NbO. Während nach Reaktionsgleichung (1) eine Volumenschrumpfung von der Ausgangsmischung zum Produkt von 23,5% stattfindet, findet nach der erfindungsgemäßen Reaktionsgleichung eine Volumenvergrößerung von (theoretisch) lediglich 6% statt, die praktisch durch Sinterschrumpfung kompensiert wird. Der Tiegel des Ofens, der nach Gleichung (1) anfänglich zu 100% gefüllt ist, ist nach Beendigung der Reaktion (theoretisch) nur noch zu 81 % mit NbO gefüllt.

Bei der erfindungsgemäßen Reaktion nach Gleichung (2) kann die Kapazität also (theoretisch) um (19%/81%=) 23% erhöht werden. Tatsächlich, unter Berücksichtigung der Sinterschrumpfung ist die Kapazitätserhöhung noch größer.

**Beispiele**

**Beispiel 1**

a) Herstellung des Niobdioxides $NbO_y$

Es wird ein teilagglomeriertes hochreines sphärisches Niobpentoxid, das durch ein Sieb der Maschenweite 300 $\mu$m gesiebt wurde, mit einer Primärkorngröße von etwa 0,7 $\mu$m Durchmesser mit einer nach BET (ASTM D 3663) bestimmten spezifischen Oberfläche von 2,4 $m^2$/g eingesetzt.

Das Pentoxid wird im Wasserstoffstrom bei einer über 40 Minuten von 950 auf 1300°C ansteigenden Temperatur, die 30 Minuten gehalten wird und anschließend über 30 Minuten auf 1200°C abgesenkt und dann noch 1 Stunde gehalten wird, zum Niobdioxid reduziert.

Das Niobdioxid hatte eine Zusammensetzung entsprechend der Formel $NbO_{2,01}$. Die Primärkorngröße war auf etwa 0,9 $\mu$m (visuell aus REM-Aufnahmen bestimmt) vergröbert, die BET-Oberfläche betrug 1,1 $m^2$/g..

Die Messung der Korngrößenverteilung mit einem Mastersizer S$\mu$ der Firma Malvem (ASTM B 822, Benetzungsmittel Daxad 11) ergab nach Reiben durch ein Sieb von 300 $\mu$m Maschenweite einen D10-Wert von 32 $\mu$m, einen D50-Wert von 164 $\mu$m und einen D90-Wert von 247 $\mu$m.

b) Herstellung des Niobmetalls

Ein Teil des unter a) erhaltenen Niobdioxides wurde in einem Reaktor auf ein Netz aus Niobdraht gegeben. Unterhalb des Netzes wurde in einem Tiegel die 1,1-fach stöchiometrische Menge Magnesium, bezogen auf den Sauerstoffgehalt des Dioxides, platziert. Der Reaktor wurde von unten nach oben mit Argon gespült. Anschließend wurde der Reaktor auf 1050°C aufgeheizt. Nach 8 Stunden wurde abgekühlt und langsam zur Passivierung der Metalloberfläche mit Luft belüftet.

Das entstandene Niobmetallpulver hatte eine Primärkorngröße von 0,85 $\mu$m, eine BET-Oberfläche von 1,32 $m^2$/g und nach Reiben durch ein Sieb von 300 $\mu$m Maschenweite einen D10-Wert von 33 $\mu$m, einen D50-Wert von 176 $\mu$m und einen D90-Wert von 263 $\mu$m.

c) Herstellung des Niobsuboxides $NbO_x$

43 Gew.-Teile des unter b) erhaltenen Niobpulvers und 57 Gew.-Teile des unter a) erhaltenen Niobdioxidpulvers wurden vermischt und in einen Tiegel gefüllt, der bis zum Rand gefüllt wurde. Der Tiegel wurde anschließend über einen Zeitraum von 2,5 Stunden in einem Ofen, der mit einem Gasgemisch aus 85 Vol.-% Argon und 15 Vol.-% Wasserstoff gespült wurde, auf 1380°C erhitzt.

Nach dem Abkühlen wurde ein Niobsuboxidpulver entsprechend der Formel $NbO_{0,96}$ erhalten. Das Suboxidpulver wies eine Primärkorngröße von 0,95 $\mu$m und eine BET-Oberfläche von 1,1 $m^2/g$ auf. Nach Siebung durch ein Sieb der Maschenweite 300 $\mu$m lag der D10-Wert bei 41 $\mu$m, der D50-Wert bei 182 $\mu$m und der D90-Wert bei 258 $\mu$m.

d) Kondensatorherstellung

In Pressformen wurden jeweils 103 mg des Niobsuboxidpulvers gemäß c) um einen Niob-Kontaktdraht herum eingefüllt und zu Presskörpern mit einer Pressdichte von 2,8 $g/cm^3$ verpresst.

Die Presskörper wurden auf einem Niobtablett freistehend im Hochvakuum von $10^{-3}$ Pa über 20 Minuten bei einer Temperatur von 1450°C gesintert. Die Anoden wurden in einem Elektrolyten aus 0,1 %iger Phosphorsäure bei einer Temperatur von 85°C und bei einem Formierstrom von 150 mA bis zu einer Formierspannung von 30V, die nach Stromabfall noch 2 Stunden gehalten wurde, formiert.

An den durch die Formierung mit einer Sperrschicht aus Niobpentoxid versehenen Anodenkörpern wurden Kapazität und Reststrom gemessen, indem die Gegenelektrode durch eine 18%ige Schwefelsäure bei 25°C simuliert wurde. Es wurde bei einer Spannung von 21 V (70% der Formierspannung) bei einer Frequenz von 120 Hz und bei einer Biasspannung von 10V nach einer Ladezeit von 3 Minuten gemessen. Die mittlere spezifische Kapazität wurde zu 75.158 $\mu$FV/g und der Reststrom zu 0,76 nA/$\mu$FV bestimmt.

## **Beispiel 2**

a) Herstellung des Niobdioxides $NbO_y$:

Als Ausgangsmaterial wird ein teilagglomeriertes, hochreines, nahezu sphärisches $Nb_2O_5$ nach Siebung < 300$\mu$m mit einer nach BET bestimmten spezifischen Oberfläche (ASTM D 3663) von 2,3 $m^2$ eingesetzt. Ein Teil dieses $Nb_2O_5$ wird im Wasserstoffstrom bei einer über 60 Minuten von 1000°C auf 1450°C ansteigenden Temperatur, die anschließend über 200 Minuten gehalten wird, zu einem Oxid der Zusammensetzung $NbO_{2,02}$ reduziert. Die spezifische Oberfläche des Dioxides betrug 0,32 $m^2/g$, die mit Laserbeugung bestimmte Korngrößenverteilung (ASTM B 822) wies einen D10-Wert von 67 $\mu$m, einen D50-Wert von 176 $\mu$m und einen D90-Wert von 284 $\mu$m auf.

b) Herstellung des Niobmetalls:

Ein Teil des unter a) hergestellten Niobdioxides wurde in einem Reaktor auf ein Drahtgeflecht gegeben, unter dem sich ein Tiegel mit der 1,2-fach stöchiometrischen Menge (bezogen auf den O-Gehalt des Niobdioxids) an Magnesium befand. Anschließend wurde der Reaktor unter strömendem Argon für 4 h auf 900°C erhitzt, wobei das Magnesium verdampfte und das darüber liegende Niobdioxid zum Metall reduzierte. Nach Abkühlung und-Passivierung wurde das gebildete Niobmetall durch mehrmaliges Waschen mit Schwefelsäure und anschließend Wasser von dem entstandenen Magnesiumoxid befreit.

Das gebildete Niobmetallpulver hatte eine Primärkorngröße von 0,4 bis 0,6 $\mu$m (visuell bestimmt aus REM-Aufnahmen), eine spezifische Oberfläche von 3,87 $m^2/g$ und wies einen mit Laserbeugung (ASTM D 3663, Gerät Malvern Mastersizer) bestimmten D10-Wert von 54 $\mu$m, einen D50-Wert von 161 $\mu$m und einen D90-Wert von 272 $\mu$m auf.

c) Herstellung der Niobsuboxide $NbO_x$:

1. Vorgehen gemäß Stand der Technik:

Die Hälfte des unter b) hergestellten Niobmetalls wird mit dem unter a) beschriebenen $Nb_2O_5$ im Gew.-Verhältnis 1:0,95 gemischt und anschließend in einem Ofen auf 1400°C für 3 h unter einem Wasserstoffpartialdruck von 67 mbar absolut erhitzt. Anschließend wurde das Pulver durch ein Sieb der Maschenweite 300 $\mu$m gerieben. Das so erhaltene Niobsuboxid ("Pulver A") hatte die Zusammensetzung $NbO_{1,01}$ und wies eine Primärkomgröße von 0,95 bis 1,1 $\mu$m auf (visuell bestimmt aus REM-Aufnahmen). Die spezifische Oberfläche betrug 1,07 $m^2/g$, der mit Laserbeugung bestimmte D10-Wert lag bei 71 $\mu$m, der D50-Wert bei 165 $\mu$m und der D90-Wert bei 263 $\mu$m.

2. Erfindungsgemäßes Vorgehen:

Die andere Hälfte des unter b) hergestellten Niobmetalls wird mit einem Teil unter a) hergestellten $NbO_{2.02}$ im Gew.-Verhältnis 1:1,34 gemischt und anschließend in einem Ofen für 2 h unter einem Wasserstoffpartialdruck von 67 mbar absolut auf 1210°C erhitzt. Das hieraus erhaltene Niobsuboxid ("Pulver B") hatte die Zusammensetzung $NbO_{0,98}$ und wies eine spezifische Oberfläche von 1,13 $m^2$/g auf. Die aus REM-Aufnahmen visuell ermittelte Primärkomgröße lag bei durchschnittlich 1,0 $\mu$m und die aus Laserbeugung ermittelte Korngrößenverteilung ergab einen D10-Wert von 62 $\mu$m, einen D50-Wert von 158 $\mu$m und einen D90-Wert von 269 $\mu$m.

Die Fließfähigkeit beider Pulver wurde nach ASTM B 213 bestimmt. Es ergaben sich folgende Werte:

Pulver A:     65 s/25g

Pulver B:     26 s/25g.

Das erfindungsgemäße Vorgehen führt demnach zu Niobsuboxiden, die sich gegenüber herkömmlich erhaltenen Produkten durch eine deutlich verbesserte Fließfähigkeit auszeichnen.

**Patentansprüche**

1. Verfahren zur Herstellung von $NbO_x$ mit 0,7<x<1,3, bevorzugt 0,9<x<1,15, besonders bevorzugt 1<x<1,05, durch Umsetzung von $NbO_y$ mit 1,8<y<2,1, bevorzugt 1,9<y<2, mit einer stöchiometrischen Menge an Niobmetall in Gegenwart von Wasserstoff.

2. Verfahren nach Anspruch 1, **dadurch gekennzeichnet, dass** Temperatur und Dauer der Reaktion so gewählt werden, dass die Reaktion weitgehend vollständig abläuft.

3. Verfahren nach Anspruch 2, **dadurch gekennzeichnet, dass** die Reaktionstemperatur 900 bis 1600°C und die Reaktionsdauer 0,5 bis 4 Stunden beträgt.

4. Verfahren nach einem der Ansprüche 1 bis 3, **dadurch gekennzeichnet, dass** das Ausgangs-Niobdioxid $NbO_y$ durch Reduktion von Niobpentoxid im Wasserstoffstrom hergestellt wird.

5. Verfahren nach Anspruch 4, **dadurch gekennzeichnet, dass** die Reduktion bei einer Temperatur von 1000 bis 1600°C durchgeführt wird

6. Verfahren nach Anspruch 4 oder 5, **dadurch gekennzeichnet, dass** nach Beendigung der Reaktion das Reaktionsprodukt noch einige Zeit bei einer Temperatur von 900 bis 1600°C zur Stabilisierung und Verdichtung des $NbO_y$-Kristallgitter gehalten wird.

7. Verfahren nach einem der Ansprüche 4 bis 6, **dadurch gekennzeichnet, dass** ein Niobpentoxid in Form eines Pulvers, das aus Agglomeraten von Primärteilchen mit einer mittleren minimalen Teilchenabmessung von 0,4 bis 2 $\mu$m gebildet ist, eingesetzt wird.

8. Verfahren nach einem der Ansprüche 1 bis 3, **dadurch gekennzeichnet, dass** ein Niobmetallpulver eingesetzt wird, das durch Reduktion eines $NbO_y$ gemäß einem der Ansprüche 4 bis 6 mit Magnesiumdampf erhalten wurde.

9. Verfahren nach Anspruch 8, **dadurch gekennzeichnet, dass** die Reduktion des $NbO_y$ zum Metall bei einer Temperatur von 750 bis 1150°C durchgeführt wird.

10. Niobsuboxid der Formel $NbO_x$ mit 0,7<x<1,3, bevorzugt 0,9<x<1,15, besonders bevorzugt 1<x<1,05, mit einer Fließfähigkeit nach ASTM B 213 von höchstens 60 s/25 g.

11. Kondensator enthaltend eine Anode in Form eines gesinterten Pulvers nach Anspruch 10.

**Claims**

1. Process for producing $NbO_x$ where $0.7<x<1.3$, preferably $0.9<x<1.15$, particularly preferably $1<x<1.05$, by reacting $NbO_y$ where $1.8<y<2.1$, preferably $1.9<y<2$, with a stoichiometric quantity of niobium metal in the presence of hydrogen.

2. Process according to Claim 1, **characterized in that** the temperature and duration of the reaction are selected in such a way that the reaction takes place substantially completely.

3. Process according to Claim 2, **characterized in that** the reaction temperature is from 900 to 1600°C and the reaction time is 0.5 to 4 hours.

4. Process according to one of Claims 1 to 3, **characterized in that** the starting niobium dioxide $NbO_y$ is produced by reducing niobium pentoxide in flowing hydrogen.

5. Process according to Claim 4, **characterized in that** the reduction is carried out at a temperature of from 1000 to 1600°C.

6. Process according to Claim 4 or 5, **characterized in that** after the reaction has ended, the reaction product is still held for a certain time at a temperature of from 900 to 1600°C in order to stabilize and densify the $NbO_y$ crystal lattice.

7. Process according to one of Claims 4 to 6, **characterized in that** a niobium pentoxide in the form of a powder which is formed from agglomerates of primary particles with a mean minimum particle size of 0.4 to 2 $\mu$m is used.

8. Process according to one of Claims 1 to 3, **characterized in that** a niobium metal powder which has been obtained by reduction of an $NbO_y$ as set forth in one of Claims 4 to 6 with magnesium vapour is used.

9. Process according to Claim 8, **characterized in that** the reduction of the $NbO_y$ to form the metal is carried out at a temperature of from 750 to 1150°C.

10. Niobium suboxide of the formula $NbO_x$, where $0.7<x<1.3$, preferably $0.9<x<1.15$, particularly preferably $1<x<1.05$, with flow properties in accordance with ASTM B 213 of at most 60 s/25 g.

11. Capacitor including an anode in the form of a sintered powder according to Claim 10

**Revendications**

1. Procédé pour la préparation de $NbO_x$ avec $0,7 < x < 1,3$, de préférence $0,9 < x < 1,15$, de manière particulièrement préférée $1 < x < 1,05$, par transformation de $NbO_y$ avec $1,8 < y < 2,1$, de préférence $1,9 < y < 2$, avec une quantité stoechiométrique de niobium métallique en présence d'hydrogène.

2. Procédé selon la revendication 1, **caractérisé en ce que** la température et la durée de la réaction sont choisies de manière telle que la réaction se déroule dans une large mesure complètement.

3. Procédé selon la revendication 2, **caractérisé en ce que** la température de réaction est de 900°C à 1600°C et la durée de réaction est de 0,5 à 4 heures.

4. Procédé selon l'une quelconque des revendications 1 à 3, **caractérisé en ce que** le dioxyde de niobium de départ $NbO_y$ est préparé par réduction de pentoxyde de niobium dans un flux d'hydrogène.

5. Procédé selon la revendication 4, **caractérisé en ce que** la réduction est réalisée à une température de 1000 à 1600°C.

6. Procédé selon la revendication 4 ou 5, **caractérisé en ce qu'**après la fin de la réaction, le produit de réaction est encore maintenu pendant un certain laps de temps à une température de 900 à 1600°C pour la stabilisation et le compactage du réseau cristallin de $NbO_y$.

**7.** Procédé selon l'une quelconque des revendications 4 à 6, **caractérisé en ce qu'**on utilise un pentoxyde de niobium sous forme d'une poudre qui est formée par des agglomérats de particules primaires avec une dimension moyenne minimale des particules de 0,4 à 2 $\mu$m.

**8.** Procédé selon l'une quelconque des revendications 1 à 3, **caractérisé en ce qu'**on utilise une poudre de niobium métallique qui a été obtenue par réduction d'un $NbO_y$ selon l'une quelconque des revendications 4 à 6 avec de la vapeur de magnésium.

**9.** Procédé selon la revendication 8, **caractérisé en ce que** la réduction du $NbO_y$ en métal est réalisée à une température de 750 à 1150°C.

**10.** Sous-oxyde de niobium de formule $NbO_x$ avec $0,7 < x < 1,3$, de préférence $0,9 < x < 1,15$, de manière particulièrement préférée $1 < x < 1,05$, présentant une aptitude à l'écoulement selon ASTM B 213 d'au maximum 60 s/25 g.

**11.** Condensateur contenant une anode sous forme d'une poudre frittée selon la revendication 10.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0015555 A1
- WO 0067936 A1